# EUROPÄISCHE PATENTSCHRIFT

(11) **EP 3 325 735 B1**
(45) Veröffentlichungstag und Bekanntmachung des Hinweises auf die Patenterteilung: **25.09.2019**
(21) Anmeldenummer: 16742250.0
(22) Anmeldetag: 20.07.2016
(51) Int. Cl.: E04F 13/08, E04F 13/12

(54) **FASSADE FÜR EIN GEBÄUDE, AUFGEBAUT AUS VERBUNDELEMENTEN**
FACADE FOR A BUILDING, COMPOSED OF COMPOSITE ELEMENTS
FAÇADE POUR UN BATIMENT, MONTEE A PARTIR D'ELEMENTS COMPOSITES

(30) Priorität: 24.07.2015 EP 15178366
(43) Veröffentlichungstag der Anmeldung: 30.05.2018
(73) Patentinhaber: BASF SE, 67056 Ludwigshafen (DE)
(72) Erfinder: HENSIEK, Rainer, 49328 Melle (DE); THATER, Michael, 49424 Goldenstedt (DE); BROCKMUELLER, Kay Michael, 67435 Neustadt (DE); WUEST, Andreas, 64673 Zwingenberg (DE); HENSEL, Torsten, 64668 Rimbach (DE); FABISIAK, Roland, 49448 Brockum (DE)
(86) Internationale Anmeldenummer: PCT/EP2016/067240
(87) Internationale Veröffentlichungsnummer: WO 2017/016944

(56) Entgegenhaltungen:
- DE-U1-202014 003 094
- FR-A1- 2 402 046

## Beschreibung

Die Erfindung betrifft eine Fassade für ein Gebäude, aufgebaut aus Verbundelementen, wobei die Verbundelemente jeweils eine innere Deckschicht, eine Polymer-Schaumschicht und eine äußere metallische Schicht aufweisen und an einer Tragstruktur befestigt sind.

Verbundelemente, die aus zwei äußeren metallischen Schichten und einer dazwischenliegenden Schicht aus einem Polymerschaum aufgebaut sind, finden vermehrt Einsatz als Fassadenelemente für Gebäude, insbesondere im gewerblichen Bereich, wie Lagerhallen oder Industriegebäude, beispielsweise Werkstätten, Turnhallen, Kaufhäuser oder Montagehallen. Die im Fassadenbau eingesetzten Verbundelemente werden vielfach auch als Sandwich-Elemente oder Sandwichpaneele bezeichnet.

Der Einsatz der Verbundelemente erlaubt eine schnelle Erstellung des jeweiligen Gebäudes, da nur eine Tragstruktur aus Metall, Beton oder Holz errichtet werden muss, an die anschließend die Verbundelemente angebracht werden. Ein weiterer Vorteil der Verbundelemente ist deren gute Wärmedämmung, die sich aus dem Aufbau mit dem innenliegenden Kern aus einem Polymerschaum ergibt.

Verschiedene Verfahren, die eingesetzt werden können, um Verbundelemente herzustellen, die als Fassadenelemente eingesetzt werden können, sind zum Beispiel aus WO-A 2009/077490, WO-A 2010/060864, JP S63 194060 A oder WO-A 2012/093129 bekannt. Hierbei ist jeweils ein wesentlicher Punkt die gute Haftung der Schicht aus Polymerschaum an den jeweiligen Deckschichten aus Metall, um zu verhindern, dass sich die metallischen Deckschichten vom Kern aus Polymerschaum ablösen, was zu einer unerwünschten Schädigung der Verbundelemente führt.

Ein weiterer wesentlicher Aspekt ist die Befestigung der Verbundelemente an der Tragstruktur. Diese Befestigung der Verbundelemente erfolgt im Allgemeinen durch eine Verschraubung. So sind zum Beispiel in "Bauen mit Stahl, Stahlbau Arbeitshilfe No. 46, Sandwichelemente", verschiedene Varianten zur Montage von Verbundelementen, die als Wandelemente oder Dachelemente eingesetzt werden, beschrieben. Hierbei hat sich insbesondere eine Verschraubungsvariante durchgesetzt, bei der die zur Befestigung eingesetzten Schrauben von außen nicht sichtbar sind. Die Verbundelemente sind dabei mit Nut und Feder ausgestattet und im Bereich der Feder werden die Verbundelemente an der Tragstruktur angeschraubt. Das nächste Verbundelement wird mit der Nut über die Feder geschoben und dabei werden die Schrauben verdeckt. Die Positionen und die Art der Verschraubung werden im Allgemeinen in den technischen Unterlagen der Hersteller der Verbundelemente vorgegeben und beschrieben. Im Unterschied dazu werden die Verbundelemente von Kühlhäusern im Allgemeinen sichtbar entlang der einzelnen Träger der Tragstruktur verschraubt.

Bei Verschraubungen der Verbundelemente, insbesondere solchen, die zum Bau von Kühlhäusern eingesetzt werden, ist ein Versagen der Verbundelemente durch Bildung eines Knicks in der äußeren metallischen Deckschicht beobachtet worden. Dieser Knick ist auf unterschiedliche Wärmeausdehnungen insbesondere bei Sonneneinstrahlung auf die Außenseite des Kühlhauses zurückzuführen, da sich die Verbundelemente auf der Außenseite bei Sonneneinstrahlung stark aufheizen können. Auf der anderen Seite herrschen im Inneren üblicherweise Temperaturen im Bereich von -35 bis -20°C, so dass über die Verbundelemente eine Temperaturdifferenz von bis zu 80°C auftreten kann. Hierdurch dehnt sich die äußere Deckschicht sehr viel stärker aus, was im schlimmsten Fall zum Totalversagen durch Einknicken der metallischen äußeren Deckschicht führt. Die entsprechenden Mechanismen sind zum Beispiel von Jörg Lange, Rene Mertens, Sandwich am Bau, Thema FORSCHUNG 1/2006, Seiten 30 bis 34 beschrieben worden.

Um der Knickbildung aufgrund von großen Temperaturdifferenzen auf der Innenseite und der Außenseite der Verbundelemente entgegenzuwirken, ist für den Bau von Tieftemperaturlagern in Silobauweise in DE-A 38 34 612 vorgeschlagen worden, Agraffen zur Befestigung der Verbundelemente an der Tragstruktur einzusetzen, die ein Verschieben ermöglichen. Agraffen zur Befestigung von Natursteinplatten für Fassadenverkleidungen sind aus DE-A 100 28 750 bekannt. Diese Befestigungsart wird jedoch ausschließlich für Tieftemperaturlager oder Kühlhäuser angewendet, eine Anwendung für andere Gebäude ist nicht bekannt.

Im Unterschied zur bekannten Bildung eines Knicks in der äußeren metallischen Deckschicht des Verbundelements hat sich nun gezeigt, dass bei verschraubten Verbundelementen mit dunklen äußeren Oberflächen eine irreversible wellenförmige Verformung auftreten kann. Diese Verformung lässt sich insbesondere dann beobachten, wenn die Fassadenelemente bei niedrigen Temperaturen montiert worden sind und eine plane oder nahezu plane Oberfläche aufweisen. Zudem tritt dieses Phänomen auch insbesondere bei Verbundelementen auf, die eine Länge von mindestens 3 m haben. Durch die wellenförmige Verformung der äußeren Oberfläche kann der der Kern aus Polymerschaum lokal reißen, und durch reversibles Kühlen und Erhitzen bilden sich größere Blasen aus. Das Erhitzen erfolgt dabei zum Beispiel durch Sonneneinstrahlung und nachts oder bei ausbleibender Sonneneinstrahlung, zum Beispiel an bewölkten Tagen, kühlt sich die Oberfläche wieder ab.

Aufgabe der vorliegenden Erfindung ist es daher, eine Fassade für ein Gebäude bereitzustellen, die aus Verbundelementen aufgebaut ist, wobei die Verbundelemente jeweils eine innere Deckschicht, eine Polymer-Schaumschicht und eine äußere metallische Schicht aufweisen und an einer Tragstruktur befestigt sind und bei der auch unter den vorstehend genannten Bedingungen keine wellenförmigen Verformungen auftreten.

Diese Aufgabe wird gelöst durch die Merkmale von Anspruch 1.

Überraschenderweise hat sich gezeigt, dass bei einer Montage, bei der das Verbundelement in einem Befestigungsbereich unbeweglich mit der Tragstruktur verbunden ist und in den anderen Befestigungsbereichen verschiebbar, oder bei der das Verbundelement auf einer Halterung aufliegt und in allen Befestigungsbereichen verschiebbar mit der Tragstruktur verbunden ist, das Auftreten der wellenförmigen Verformungen deutlich reduziert werden kann und in der Regel gar keine wellenförmigen Verformungen zu beobachten sind. Hierbei ist es insbesondere vorteilhaft, wenn die Verschiebung in einer Richtung parallel zur äußeren Deckschicht des Verbundelements möglich ist.

Die Verbundelemente werden üblicherweise an einer Fachwerkstruktur als Trägerstruktur angebracht. Diese weist in der Regel quer zur Montagerichtung der Verbundelemente verlaufende Träger auf, an denen die Verbundelemente befestigt werden. Als Träger können zum Beispiel Holzbalken oder Metallträger, insbesondere Eisenträger oder Stahlträger eingesetzt werden. Im Fall von Eisenträgern oder Stahlträger werden üblicherweise T-Träger oder Doppel-T-Träger verwendet.

Im Allgemeinen stellt die Befestigung an einem Träger einen Befestigungsbereich dar. Es besteht jedoch insbesondere bei eng benachbarten Trägern auch die Möglichkeit, dass die Befestigung an den eng benachbarten Trägern einen Befestigungsbereich bildet. Hierbei wird als ein Befestigungsbereich üblicherweise ein Bereich bezeichnet, der weniger als 10%, bevorzugt weniger als 5% der Gesamtlänge des Verbundelements beträgt.

Der Abstand zwischen zwei Befestigungsbereichen beträgt mehr als 10% und maximal 100% der Gesamtlänge des Verbundelements. Bevorzugt beträgt der Abstand zwischen zwei Befestigungsbereichen zwischen 15 und 50% der Gesamtlänge des Verbundelements und insbesondere zwischen 20 und 50% der Gesamtlänge. Der Abstand zwischen zwei Befestigungsbereichen ist dabei auch abhängig von der Gesamtlänge des Verbundelements. Der Abstand zwischen zwei Befestigungsbereichen ist dabei der Abstand zwischen den am dichtesten benachbarten Befestigungselementen der zwei benachbarten Befestigungsbereiche.

Der Befestigungsbereich, in dem das Verbundelement unbeweglich mit der Tragstruktur verbunden ist, kann jeder beliebige Befestigungsbereich des Verbundelements sein. So kann der Befestigungsbereich, in dem das Verbundelement unbeweglich mit der Tragstruktur verbunden ist, an einem Ende der Längsseite des Verbundelements oder auch mittig an einer beliebigen Position an der Längsseite sein. Die unbewegliche Befestigung kann dabei zum Beispiel durch eine Verschraubung, eine Vernietung, eine Verklebung oder eine Verschweißung realisiert werden. Bevorzugt und üblich ist dabei eine Verschraubung, bei der die Schraube durch das Verbundelement geschraubt und am Träger der Tragstruktur befestigt wird. Hierbei ist es möglich, die unbewegliche Befestigung mit einer oder bevorzugt auch mit mehreren Schrauben, zum Beispiel zwei, drei oder vier Schrauben zu realisieren. Auch die Verwendung von mehr als vier Schrauben ist möglich. Die Anzahl der verwendeten Schrauben ist dabei abhängig von der Masse des Verbundelements und der Größe des Verbundelements sowie vom Abstand der einzelnen Befestigungsbereiche. Wenn mehr als eine Schraube für die unbewegliche Verbindung eingesetzt wird, können die Schrauben mit einem beliebigen Abstand innerhalb des Befestigungsbereichs positioniert sein.

Erfindungsgemäß liegen alle Befestigungsbereiche auf einer Linie, insbesondere an einer Position, an der die Befestigungselemente, mit denen das Verbundelement an der Tragstruktur befestigt ist, von einer Auskragung am benachbarten Verbundelement verdeckt werden können. Es ist jedoch auch möglich, zusätzlich Befestigungen über die Breite des Verbundelements verteilt vorzusehen oder auch Befestigungsbereiche, die abwechselnd auf einer Seite und auf der anderen Seite des Verbundelements liegen. Weiterhin können auch jeweils auf einer Linie quer zur Längsrichtung des Verbundelements mehrere, beispielsweise zwei oder drei, Befestigungsbereiche vorgesehen sein. Besonders bevorzugt ist es jedoch, wenn alle Befestigungsbereiche auf einer Linie parallel zur Längsrichtung des Verbundelements liegen.

Wenn das Verbundelement auf einer Halterung aufliegt, kann jede beliebige Halterung verwendet werden. So ist es zum Beispiel möglich, einen Vorsprung an der Tragstruktur vorzusehen oder einen Winkel oder eine vorstehende Schraube an der Tragstruktur zu befestigen, auf der das Verbundelement aufliegt. Alternativ ist es auch möglich, das Verbund zum Beispiel auf einer Mauer, einem Stein oder einem Boden aufliegen zu lassen, wobei in diesem Fall die Mauer, der Stein oder der Boden als Halterung funktionieren. Selbstverständlich ist auch jede andere Halterung denkbar, auf der das Verbundelement aufliegen kann.

Verbundelemente im Rahmen der vorliegenden Erfindung sind aufgebaut aus einer äußeren metallischen Deckschicht, einem Kern aus einem Polymerschaum und einer inneren Deckschicht. Als äußere metallische Deckschicht wird dabei die nach Montage an der Tragstruktur nach außen weisende metallische Deckschicht bezeichnet und als innere Deckschicht die Deckschicht, die nach Montage in Richtung des Gebäudeinneren zeigt.

Die äußere Deckschicht ist erfindungsgemäß aus einem Metall aufgebaut, wohingegen die innere Deckschicht aus einem Metall, Kunststoff, Holz oder einer Deckpappe aufgebaut sein kann. Bevorzugt ist jedoch auch die innere Deckschicht aus einem Metall gefertigt.

Als Metalle für die äußere Deckschicht und - wenn aus Metall gefertigt - für die innere Deckschicht werden üblicherweise Aluminium, Stahl, Edelstahl oder Kupfer eingesetzt. Besonders bevorzugt ist die Verwendung von Stahl. Das Metall der metallischen Deckschicht kann beschichtet oder unbeschichtet sein. Zudem können die Metall der metallischen Deckschicht vorbehandelt sein, zum Beispiel mit Coronabehandlung, Plasmabehandlung, Beflammung oder anderen üblichen Methoden. Hierbei ist es möglich, für die innere und für die äußere Deckschicht unterschiedliche Materialien einzusetzen. Bevorzugt wird jedoch das gleiche Material für die innere und die äußere Deckschicht verwendet.

Die äußere Deckschicht und, wenn die innere Deckschicht aus Metall gefertigt wird, auch die innere Deckschicht haben üblicherweise eine Dicke im Bereich von 0,25 bis 1,5 mm. Wenn Stahl als Material für die Deckschicht eingesetzt wird, hat diese vorzugsweise eine Dicke im Bereich von 0,25 bis 0,88 mm und besonders bevorzugt im Bereich von 0,4 bis 0,75 mm. Eine Deckschicht aus Edelstahl hat vorzugsweise eine Dicke im Bereich von 0,3 bis 0,9 mm und besonders bevorzugt im Bereich von 0,4 bis 0,6 mm. Die Dicke einer Deckschicht aus Aluminium ist vorzugsweise 0,3 bis 1,5 mm und besonders bevorzugt 0,5 bis 0,8 mm und die Dicke einer Deckschicht aus Kupfer ist vorzugsweise 0,3 bis 1 mm und besonders bevorzugt 0,4 bis 0,7 mm. Die Oberfläche der metallischen Deckschicht kann dabei jede beliebige Struktur aufweisen, bevorzugt ist die Oberfläche jedoch plan oder weist nur eine leichte Struktur, eine sogenannte Mikrolinierung auf. Das bedeutet, dass die durch die Struktur vorhandenen Erhebungen oder Vertiefungen in der Oberfläche nicht tiefer als 2 mm, bevorzugt nicht tiefer als 1 mm sind.

Verbundelemente, die für die erfindungsgemäße Fassade eingesetzt werden, können jede beliebige für solche Verbundelemente übliche Längen und Breiten aufweisen. Im Allgemeinen haben die Verbundelemente eine Länge von 2,5 bis 30 m, bevorzugt im Bereich von 3 bis 24 m und insbesondere im Bereich von 5 bis 20 m. Die Breite des Verbundelements liegt dabei im Bereich von 0,5 bis 1,25 m, bevorzugt im Bereich von 0,9 bis 1,2 m.

Die Dicke des Verbundelements liegt vorzugsweise im Bereich von 50 bis 150 mm und bevorzugt im Bereich von 60 bis 140 mm.

Der Kern aus Polymerschaum ist üblicherweise aufgebaut aus einem Hartschaum auf Isocyanatbasis, beispielsweise einem Polyurethan-Schaum oder einem Polyisocyanurat-Schaum. Weiterhin geeignet als Polymerschaum für den Kern ist geschäumtes Polystyrol. Geeignete Polyurethane und Polyisocyanurate sind zum Beispiel in WO-A 2010/060864 beschrieben.

Die verschiebbare Verbindung , in der die Verbundelemente parallel zu ihrer Oberfläche beweglich sind, kann eine Verschiebung senkrecht und parallel zur Verbindungskante mit einem benachbarten Verbundelement erlauben oder bevorzugt eine Verschiebung nur parallel zur Verbindungskante mit einem benachbarten Verbundelement. Die Verbindungskante zu dem benachbarten Verbundelement ist dabei die Seite des Verbundelements, die parallel zur Länge des Verbundelements verläuft. Im Allgemeinen sind die Verbindungskanten profiliert ausgebildet, wobei die Verbindungskanten benachbarter Verbundelemente nach Art eines Nut- und Feder-Systems ineinandergreifen. Hierbei wird die Befestigung eines Verbundelements jeweils auf einer Seite durch die Nut- und Federverbindung realisiert. Dies erlaubt eine nur einseitige Befestigung an der Tragstruktur entlang einer Längskante, bei der die Befestigungsbereiche auf einer Linie liegen. Die Befestigung an der Tragstruktur erfolgt dabei üblicherweise auf der Seite der Feder. Lediglich beim ersten Verbundelement, das mit seiner Nut nicht über die Feder eines benachbarten Verbundelements greifen kann, ist auch eine Befestigung an der Tragstruktur auf der Seite der Nut zwingend notwendig.

Die verschiebbare Befestigung kann durch alle möglichen, dem Fachmann bekannten Befestigungsvarianten, die eine Verschiebung ermöglichen, realisiert werden. So kann die verschiebbare Befestigung zum Beispiel ausgewählt sein aus einer Agraffe, einem verschiebbarem Riegel, einem Linearlager, einer Schienenführung, einer Verschraubung mit einer Schraube durch Distanzstücke, die eine Bewegung der Schraube ermöglichen, einer Verschraubung mit Schrauben mit biegeweichem Kern oder einer Verschraubung durch ein Langloch, einer Befestigung mit Federn, die einerseits am Verbundelement und andererseits an der Tragstruktur befestigt sind oder einer Befestigung mit einem biegeweichen Zwischenelement.

Eine Agraffe umfasst dabei zum Beispiel zwei ineinandergreifenden Flachhaken, wobei ein Flachhaken an der Tragstruktur und der zweite Flachhaken an dem Verbundelement befestigt ist. Die ineinandergreifenden Flachhaken werden dabei nicht aneinander fixiert, so dass sich diese relativ zueinander verschieben können.

Im Unterschied zu einer Agraffe, die eine Bewegung senkrecht und parallel zur Längskante des Verbundelements erlaubt, ist bei einem verschiebbaren Riegel nur eine Verschiebung in eine Richtung möglich. Ein solcher Riegel umfasst dabei ein festes Element, das in einer Öse verschiebbar aufgenommen ist. Zur Befestigung des Verbundelements an der Tragstruktur ist es dabei sowohl möglich, das feste Element an dem Verbundelement und die Öse an der Tragstruktur anzubringen als auch, das feste Element an der Tragstruktur und die Öse am Verbundelement.

Wenn als verschiebbare Befestigung ein Linearlager genutzt wird, so kann jedes, dem Fachmann bekannte Linearlager eingesetzt werden. Hierbei ist es besonders bevorzugt, wenn das Linearlager eine Verschiebung nur in eine Richtung ermöglicht. Um ein Verschieben des Verbundelements gegenüber der Tragstruktur zur ermöglichen, wird das Linearlager zum Beispiel mit dem festen Teil an dem Verbundelement angebracht und mit dem beweglichen an der Tragstruktur. Alternativ ist selbstverständliche auch eine Befestigung des festen Teils an der Tragstruktur und des beweglichen Teils an dem Verbundelement möglich. Linearlager, die zur Befestigung eingesetzt werden können, können zum Beispiel Linearwälzlager wie Linearrollenlager oder Linearkugellager sein oder auch Lineargleitlager. Hierbei ist jede dem Fachmann bekannte Bauform von Linearlagern einsetzbar, mit denen eine Befestigung des Verbundelements an der Tragstruktur realisiert werden kann.

Eine weitere Möglichkeit einer verschiebbaren Befestigung ist der Einsatz einer Schienenführung. Hierzu wird im Allgemeinen entweder an der Tragstruktur oder an dem Verbundelement eine Schiene angebracht und an dem jeweils anderen Element ein auf der Schiene verschiebbares Bauteil. Das auf der Schiene verschiebbare Bauteil kann zum Beispiel mindestens eine Rolle sein oder eine gleitend auf der Schiene verschiebbare zweite Schiene. Um eine Befestigung des Verbundelements an der Tragstruktur sicherzustellen ist es dabei zum Beispiel möglich, die Schiene so zu gestalten, dass diese die Rollen umschließt, um zu verhindern, dass das Verbundelement von der Tragstruktur wegklappen kann. Alternativ ist es auch möglich, die Schiene und die Rollen so zu gestalten, dass die Rollen hinter die Schiene greifen und auf diese Weise eine Befestigung realisiert wird. Wenn die Schienenführung zwei aneinander gleitende Schienen umfasst ist es vorteilhaft, wenn sich die Schienen so umschließen, dass ebenfalls eine stabile Befestigung erhalten wird, die nur eine Verschiebung in einer Richtung erlaubt. Um bei dem Einsatz von zwei Schienen die Relativbewegung der Schienen zueinander zu erleichtern ist es weiterhin möglich, zusätzlich Rollen zwischen den Schienen zu positionieren, so dass die Schienen nicht direkt aufeinander gleiten sondern jeweils auf den Rollen laufen. Zur Befestigung des Verbundelements an der Tragstruktur ist dabei jede beliebige, dem Fachmann bekannte Schienenführung geeignet, die das auf die Befestigung wirkende Gewicht des Verbundbauteils tragen kann.

Neben der Befestigung mit linear beweglichen Elementen ist es auch möglich, die verschiebbare Befestigung durch eine geeignete Verschraubung oder eine geeignete Werkstoffauswahl zu realisieren.

Um mit einer Verschraubung eine verschiebbare Befestigung zu erhalten, ist es zum Beispiel möglich, die Verschraubung durch Distanzstücke zu führen, die zwischen dem Verbundelement und der Tragstruktur positioniert sind. Die eingesetzten Schrauben sind dabei biegeweich, so dass sich diese innerhalb der Distanzstücke verformen können, so dass eine Bewegung des Verbundelements ermöglicht wird. Die Biegeweichheit der Schrauben kann durch geeignete Materialwahl und einen geeigneten Durchmesser erreicht werden. Nicht geeignet sind dabei spröde Materialien, die zu einem Bruch führen, wenn sich die Schraube verbiegt. Weiterhin ist darauf zu achten, dass das Material so ausgewählt wird, dass auch ein regelmäßiges Biegen und Zurückbiegen der Schraube nicht zu einem Bruch führt. Besonders geeignet sind daher duktile Materialien wie Stahl, Aluminium, Kupfer, insbesondere Kohlenstoff-Stahl und rostfreier Stahl beziehungsweise Edelstahl. Um eine ausreichende Verschiebung des Verbundelements sicherstellen zu können ist es weiterhin notwendig, dass die eingesetzten Schrauben eine ausreichend große elastische oder plastische, vorzugsweise elastische Verformung zulassen. Eine solche biegeweiche Schraube oder auch eine Schraube mit einem biegeweichen Kern kann alternativ auch ohne den Einsatz von Distanzstücken eingesetzt werden. In diesem Fall erfolgt die Verformung der Schraube innerhalb des Kerns aus Polymermaterial im Verbundelement. Um den Kern aus Polymerschaum nicht zu schädigen ist jedoch der Einsatz von Distanzstücken in diesem Fall bevorzugt.

Alternativ zur Nutzung von Distanzstücken ist es auch möglich, die Schraube durch ein Langloch zu führen, so dass durch ein Verschieben der Schraube in dem Langloch gleichzeitig eine Bewegung des Verbundelements auf der Tragstruktur ermöglicht wird. Hierzu ist es einerseits möglich, die Schrauben jeweils durch ein passendes Loch in dem Verbundelement zu führen und das Langloch an der Tragstruktur vorzusehen. Die Schraube wird dann durch das Langloch geführt und auf der dem Verbundelement gegenüberliegenden Seite mit einer Mutter fixiert. Hierbei wird die Mutter nur so fest angezogen, dass das Verbundelement hält, aber ein Verschieben der Schraube innerhalb des Langlochs weiterhin möglich ist. Das Langloch kann dabei entweder in einem Träger der Tragstruktur ausgebildet sein oder in einem mit dem Träger verbundenen Befestigungselement, zum Beispiel einem auf dem Träger angebrachten Winkel. Der Winkel kann dabei mit dem Träger zum Beispiel verschraubt, vernietet, verklebt oder verschweißt sein. Um insbesondere ein Verschieben des Verbundelements parallel zur Längskante zu ermöglichen wird das Langloch so ausgebildet, dass dieses parallel zur Längskante des Verbundelements ausgerichtet ist.

Alternativ zur Ausbildung des Langlochs an der Tragstruktur ist es auch möglich, das Langloch in dem Verbundelement auszuführen. Bevorzugt ist das Langloch jedoch an der Tragstruktur ausgebildet.

Für eine leichtere Montage ist es auch möglich, die Schraube nicht durch ein Langloch sondern durch ein Loch mit einem so großen Durchmesser zu führen, dass eine Bewegung der Schraube innerhalb des Lochs möglich ist. Hierzu ist der Durchmesser des Lochs vorzugsweise mindestens doppelt so groß wie der Durchmesser der Schraube. Der maximale Durchmesser des Lochs wird durch den Schraubenkopf oder ein Unterlegsystem des Kopfes, beispielsweise eine Unterlegscheibe, begrenzt. Um zu vermeiden, dass die Schraube durch das Loch durchtritt ist es notwendig, dass der Schraubenkopf einen größeren Durchmesser aufweist als das Loch. Wenn eine Schraube mit einem nicht kreisförmigen Kopf eingesetzt wird, zum Beispiel mit einem Sechskant, ist es erforderlich, dass die maximale Ausdehnung des Schraubenkopfes so groß ist, dass diese nicht durch das Loch durchtreten kann. Besonders bevorzugt ist der Schraubenkopf so groß, dass immer der vollständige Rand des Schraubenkopfes auf dem das Loch umgebenden Material aufliegt.

Eine weitere Möglichkeit für eine Befestigung, die ein Verschieben des Verbundelements gegenüber der Tragstruktur erlaubt ist der Einsatz von Federn, die einerseits am Verbundelement und andererseits an der Tragstruktur angebracht sind. Hierbei können alle beliebigen, dem Fachmann bekannten Federn eingesetzt werden. So ist es zum Beispiel möglich, Blattfedern oder Schraubenfedern einzusetzen. Bei der Verwendung von Federn ist allerdings darauf zu achten, dass die federnde Halterung so ausgelegt ist, dass die Verbundelemente nicht beginnen zu schwingen, wenn eine Druckkraft auf diese ausgeübt wird. Hierzu muss die Federkonstante entsprechend ausgelegt werden. Weiterhin ist es ausreichend, eine Feder mit einem Federweg im Bereich von -20mm bis 20mm, bevorzugt im Bereich von -14mm bis 14mm einzusetzen.

Eine weitere Möglichkeit ist der Einsatz eines biegeweichen Zwischenelements. Ein solches biegeweiches Zwischenelement kann zum Beispiel ein Winkel aus einem elastisch verformbaren Material sein, das jedoch eine ausreichende Festigkeit aufweist, um das Verbundelement zu halten. Geeignete Materialien sind zum Beispiel Stahl, Aluminium, Kupfer, Holz und Kunststoffe. Geeignete Kunststoffe sind zum Beispiel Polyamide (PA), Polybutylenterephthalat (PBT), Polyethylenterephthalat (PET), Polycarbonat (PC), Styrol-Acrylnitril-Copolymere (SAN), Polyurethan (PU), Polyethylen (PE), Polypropylen (PP), Polyvinylchlorid (PVC), AcrylnitrilButadien-Styrol-Copolymere (ABS), Acrylnitril-Styrol-Acrylat (ASA), thermoplastisches Polyurethan (TPU), thermoplastische Elastomere (TPE), Harze, beispielsweise Epoxidharze, Phenolharze oder Polyester-Harze, Kautschuke, beispielsweise Naturkautschuk (NR), Nitril-Butadien-Kautschuk (NBR), Styrol-Butadien-Kautschuk (SBR), Chloropren-Kautschuk (CR), Butadien-Kautschuk (BR) und Ethylen-Propylen-Dien-Kautschuk (EPDM).

Zur Befestigung des Verbundelements ist es möglich, in jedem Befestigungsbereich nur ein Befestigungselement vorzusehen. Alternativ können jedoch auch mehr als ein Befestigungselement vorgesehen sein. Dazu ist es sowohl möglich, in nur einem Befestigungsbereich mindestens ein Befestigungselement vorzusehen als auch in mehr als einem Befestigungsbereich, beispielsweise in allen. Bevorzugt ist es dabei, in allen Befestigungsbereichen, in denen das Verbundelement verschiebbar befestigt ist, die gleiche Art an Befestigungselement zu verwenden. Weiterhin werden vorzugsweise in allen Befestigungsbereichen, in denen das Verbundelement verschiebbar befestigt ist, gleich viele Befestigungselemente eingesetzt. Die Anzahl der Befestigungselemente in dem Befestigungsbereich, in dem das Verbundelement unbeweglich mit der Tragstruktur verbunden ist, kann dabei von der Anzahl der Befestigungselement in den Befestigungsbereichen, in denen das Verbundelement verschiebbar befestigt ist, abweichen. So ist es abhängig von der Art der Befestigungselement in den Bereichen, in denen das Verbundelement verschiebbar befestigt ist, zum Beispiel möglich, in den Bereichen, in denen das Verbundelement verschiebbar befestigt ist, jeweils nur ein Befestigungselement vorzusehen und in dem Befestigungsbereich, in dem das Verbundelement unbeweglich an der Tragstruktur befestigt ist, mehrere Befestigungselemente, beispielsweise Schrauben, einzusetzen.

Die äußere metallische Schicht des Verbundelements kann jede beliebige Farbe aufweisen. Da die Bildung der Wellen jedoch insbesondere bei dunklen Fassadenflächen, das heißt einer dunklen äußeren metallischen Schicht, auftritt, ist es besonders bevorzugt, die erfindungsgemäße Fassade bei eher dunklen Außenflächen einzusetzen. Hierbei wird unterschieden in drei Farbgruppen. Farbgruppe eins sind im Allgemeinen sehr helle Oberflächen mit einem Remissionswert (englisch: Reflectance) von mehr als 75%, Farbgruppe zwei im Allgemeinen helle Oberflächen mit einem Remissionswert von 40 bis 74% und Farbgruppe 3 im Allgemeinen dunkle Oberflächen mit einem Remissionswert von weniger als 39%, jeweils bezogen auf ein erdnahes Sonnenspektrum. Bevorzugt ist es dabei, wenn die äußere metallische Schicht eine Farbe mit einem Remissionswert im Bereich von 0 bis 74 %, besonders bevorzugt von 0 bis 39% aufweist. Beim Remissionswert handelt es sich um den prozentualen Anteil an hemisphärisch remittierter (englisch: Reflectance including gloss) Strahlung im sichtbaren und Nah-Infrarotbereich des erdnahen Sonnenspektrums zwischen 300nm und 2500nm Wellenlänge. Ein Remissionswert von 0% bedeutet schwarz.

Zur Bestimmung der Remission ist ein geeignetes Referenzspektrum, das dem erdnahen Sonnenspektrum entspricht, in ASTM G 173-03, 2008, in Tabelle 2 angegeben. Zur Messung von Absorption, Transmission und Remission kann der in ASTM E903-96, April 1996, beschriebene apparative Aufbau, die sogenannte Integrationssphäre verwendet werden. Die analytische Auswertung erfolgt dann, wie in ASTM E903-96, April 1996, dargelegt.

Die Verbundelemente können in jedem beliebigen Winkel an der Tragstruktur befestigt werden. Üblich ist eine horizontale oder vertikale Befestigung. Hierbei wird die Ausrichtung entlang Längskante des Verbundelements definiert. Bei einer horizontalen Befestigung verlaufen die Längskanten der Verbundelemente horizontal und entsprechend bei einer vertikalen Befestigung vertikal.

Ausführungsbeispiele der Erfindung sind in den Figuren dargestellt und werden in der nachfolgenden Beschreibung näher erläutert.

Es zeigen:
- Figur 1: einen Querschnitt durch ein Verbundelement,
- Figuren 2a bis 2c: einen Längsschnitt durch einen Fassadenausschnitt mit unterschiedlichen Tragstrukturen,
- Figur 3: eine dreidimensionale Ansicht eines Fassadenelements mit wellenförmigem Schadensbild,
- Figuren 4 bis 7: verschiedene Varianten für Befestigungselemente für eine verschiebbare Befestigung der Verbundelemente.

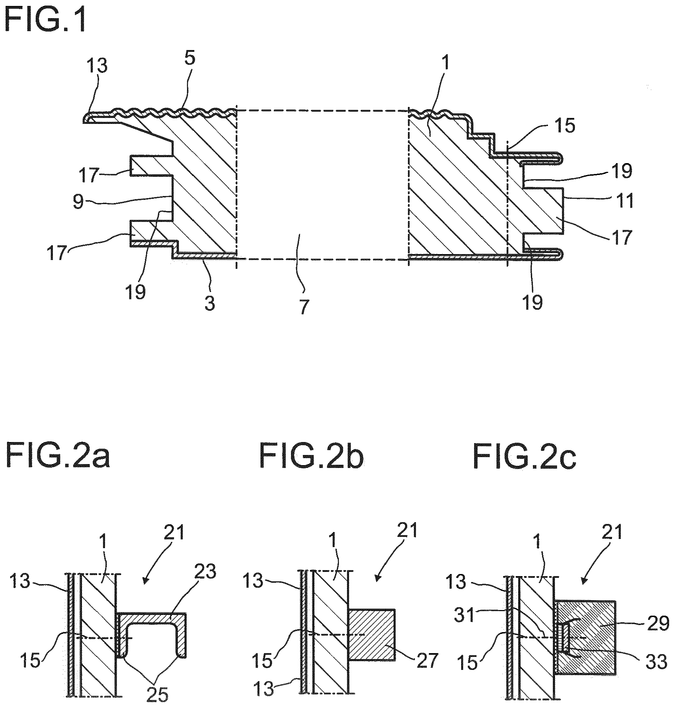

Figur 1 zeigt einen Querschnitt durch ein Verbundelement, wie es für Fassaden, insbesondere von gewerblichen Immobilien wie Lagerhallen oder Industriegebäude, beispielsweise Werkstätten oder Montagehallen, Turnhallen oder Kaufhäuser eingesetzt wird.

Ein Verbundelement 1 ist aufgebaut aus einer inneren Deckschicht 3, einer äußeren metallischen Deckschicht 5 und einem Kern 7 aus einem Polymerschaum. Die innere Deckschicht 3 kann aus einem Metall, einem Kunststoff, Holz oder auch aus Dachpappe gefertigt sein. Bevorzugt ist die innere Deckschicht 3 jedoch aus einem Metall. Besonders bevorzugt ist es weiterhin, für die innere Deckschicht 3 und für die äußere metallische Deckschicht 5 jeweils das gleiche Material zu verwenden. Geeignete Metalle sind zum Beispiel Stahl, Edelstahl, Aluminium oder Kupfer.

Entlang der Längsrichtung des Verbundelements sind an beiden Seiten Strukturen 9, 11 ausgebildet, wobei die Struktur 9 auf einer Seite weitgehend das Negativbild der Struktur 11 auf der gegenüberliegenden Seite ist, so dass bei Montage der Verbundelemente die Strukturen 9, 11 entsprechend einer Nut- und Federverbindung ineinandergreifen. Zur Montage werden die Verbundelemente 1 jeweils auf einer Seite mit einer hier nicht dargestellten Tragstruktur verbunden. Auf der Seite, an der das Verbundelement nicht mit der Tragstruktur verbunden ist, ist eine Auskragung 13 ausgebildet, die nach der Montage der Verbundelemente 1 über die Befestigungselemente 15, beispielsweise Schrauben, mit denen das benachbarte Verbundelement 1 an der Tragstruktur befestigt ist, hinausragt und so die Befestigungselemente 15 abdeckt. Auf diese Weise wird eine Fassade erzeugt, an der keine Befestigungselemente sichtbar sind. Der Halt des Verbundelements 1 auf der Seite, auf der keine Befestigungsmittel vorgesehen sind, erfolgt durch das Ineinanderschieben der Strukturen 9, 11. Die Form der als Nut- und Federverbindung wirkenden Strukturen 9, 11 weist dabei üblicherweise, wie hier dargestellt mehrere Vorsprünge 17 und Rücksprünge 19 auf. Dabei können die Strukturen 9, 11 jede beliebige, dem Fachmann bekannte Form aufweisen.

In den Figuren 2a, 2b und 2c sind jeweils schematisch Befestigungen von Verbundelementen an unterschiedlichen Tragstrukturen dargestellt.

Bei der in Figur 2a dargestellten Variante ist die Tragstruktur 21 aus U-Profilen 23 aus Stahl aufgebaut. Die einzelnen Verbundelemente 1 sind dabei an den jeweiligen U-Profilen 23 der Tragstruktur 21 angebracht. Die U-Profile sind dabei vorzugsweise so ausgerichtet, dass die Schenkel 25 der U-Profile quer zur Längsrichtung der Verbundelemente 1 verlaufen. So können die Schenkel 25 der U-Profile 23 zum Beispiel bei einer vertikalen Montage der Verbundelemente 1 nach oben weisen oder wie hier dargestellt nach unten.

Alternativ zu der in Figur 2a dargestellten Variante mit Trägern aus Metall, insbesondere Stahl, ist es auch möglich, die Tragstruktur 21 aus Trägern aus Holz oder aus Beton aufzubauen. Bei Holzträgern 27, wie sie in Figur 2b dargestellt sind, werden vorzugsweise solche mit einem rechteckigen, bevorzugt quadratischen Querschnitt eingesetzt. Für eine Verschraubung der Verbundelemente 1 ist es dabei möglich, Holzschrauben zu verwenden, die direkt in die Holzträger eingeschraubt werden. Bei Betonträgern 29, wie sie in Figur 2c dargestellt sind, werden entsprechend geeignete Befestigungsmittel verwendet, die eine Befestigung in Beton ermöglichen. Hierzu ist es zum Beispiel möglich, vorzubohren und Dübel zu verwenden, oder ein Gewinde 31 in den Betonträger 29 einzugießen, dieses Gewinde 31 durch das Verbundelement 1 zu führen und mit einer Mutter 33 auf der dem Betonträger 29 abgewandten Seite zu befestigen. Alternativ könnte auch eine geeignete Mutter in eine Aussparung im Betonträger eingegossen werden und das Verbundelement kann dann mit einer geeigneten Schraube, die in die in den Betonträger eingegossene Mutter eingreift, befestigt werden. Weitere Befestigungsmethoden sind möglich.

Bei allen drei dargestellten Varianten für Tragstrukturen werden die Befestigungselemente 15, mit denen die Verbundelemente 1 an der Tragstruktur 21 befestigt sind, durch die Auskragung 13 eines benachbarten Verbundelements abgedeckt.

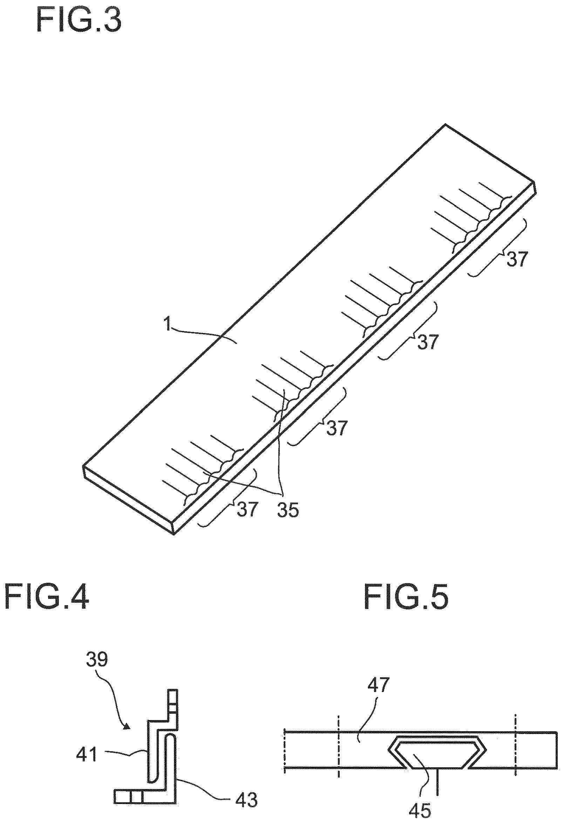

Figur 3 zeigt eine dreidimensionale Ansicht eines Fassadenelements mit einem wellenförmigen Schadensbild.

Ein wellenförmiges Schadensbild 35 kann insbesondere im Bereich der jeweiligen Befestigungsbereiche 37 des Verbundelements 1 auftreten. Ein solches Schadensbild lässt sich insbesondere dann beobachten, wenn die Verbundelemente 1 bei niedrigen Temperaturen montiert wurden und anschließend die Sonne auf die Verbundelemente strahlt.

Um ein solches Schadensbild zu vermeiden, werden die Verbundelemente 1 erfindungsgemäß in einem Befestigungsbereich 37 fest mit der Tragstruktur 21 verbunden und in den übrigen Befestigungsbereichen 37 verschiebbar oder alternativ in allen Befestigungsbereichen 37 verschiebbar, wobei die Verbundelemente 1 in diesem Fall fest auf einer Halterung aufliegen. Geeignete Befestigungselemente, die eine verschiebbare Befestigung der Verbundelemente an der Tragstruktur 21 ermöglichen, sind in den Figuren 4 bis 7 dargestellt.

Eine Möglichkeit für eine verschiebbare Befestigung ist eine Agraffe, wie sie in Figur 4 dargestellt ist.

Eine Agraffe 39 umfasst dabei einen ersten Flachhaken 41, der an der Tragstruktur befestigt ist und einen zweiten Flachhaken 43, der an dem Verbundelement angebracht ist. Der erste Flachhaken 41 und der zweite Flachhaken 43 greifen dabei so ineinander, dass diese ineinander verschiebbar sind. Hierbei ist eine zweidimensionale Verschiebung in Längsrichtung und in Querrichtung möglich. Eine Bewegung in Richtung zur Tragstruktur wird unterbunden. Um sicherzustellen, dass sich die Flachhaken 41, 43 nicht so weit verschieben, dass diese nicht mehr ineinandergreifen, sind die Flachhaken 41, 43 so groß zu dimensionieren, dass selbst bei einer maximalen Verschiebung noch Kontakt besteht.

Eine zweite Möglichkeit für eine verschiebbare Befestigung ist in Figur 5 dargestellt. Bei dieser verschiebbaren Befestigung wird eine Schiene 45 in einer Führung 47 geführt. Diese Art der Befestigung erlaubt dabei nur eine eindimensionale Verschiebung. Die Schiene 45 und die Führung 47 werden daher so angebracht, dass eine Verschiebung in Längsrichtung des Verbundelements ermöglicht wird. Hierzu wird die Schiene 45 parallel zur Längsrichtung des Verbundelements entweder am Verbundelement oder alternativ an der Tragstruktur angebracht. Entsprechend wird die Führung 47 bei Montage der Schiene 45 an der Verbundelement an der Tragstruktur befestigt und bei Montage der Schiene 45 an der Tragstruktur an dem Verbundelement.

Die Befestigung der Führung 47 erfolgt zum Beispiel mit Hilfe von Schrauben, die jeweils neben der Schiene 45 positioniert sind. Auch die Schiene 45 kann durch eine Verschraubung befestigt werden. Alternativ ist auch eine Befestigung der Schiene 45 und der Führung 47 durch Verkleben, Verschweißen oder Vernieten denkbar.

Um eine störungsfreie Verschiebung zu erhalten, weist die Führung 47 ein Profil auf, das der Querschnittsfläche der Schiene 45 entspricht. Dabei ist die Querschnittsfläche der Führung 47 etwas größer als die des Profils der Schiene 45, um ein Verkanten oder Verklemmen zu verhindern. Die Länge der Führung 47 wird ebenfalls so gewählt, dass ein verkantungsfreies Verschieben der Schiene 45 in der Führung 47 sichergestellt werden kann. Die Länge der Schiene 45 wird so gewählt, dass diese auch bei maximaler Verschiebung nicht aus der Führung 47 gleitet.

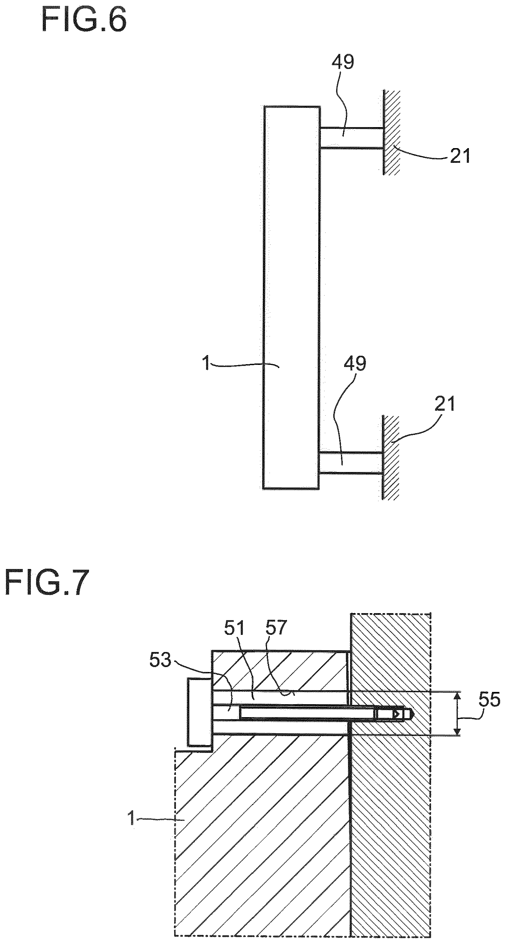

Figur 6 zeigt schematisch eine Befestigung des Verbundelements an der Tragstruktur mit Hilfe von Federn. Hierzu sind Federn 49 mit einer Seite an dem Verbundelement 1 und mit der anderen Seite an der Tragstruktur 21 angebracht. Die Federn sind dabei so ausgelegt, dass diese einen maximalen Federweg von -20 bis 20 mm aufweisen. Die Federn werden weiterhin so ausgelegt, dass die Verbundelemente bei Angriff eine Kraft nicht beginnen zu schwingen.

Alternativ zu den Federn 49 ist es auch möglich, Distanzstücke aus einem biegeweichen Material einzusetzen, so dass durch die Distanzstücke eine Bewegung des Verbundelements ermöglicht wird. Bei der Bewegung des Verbundelements verformen sich die Distanzstücke vorzugsweise elastisch, so dass diese durch mehrfache Belastung aufgrund sich ändernder Bewegung der Verbundelemente nicht geschädigt werden.

Eine verschiebbare Befestigung mit einer Verschraubung ist in Figur 7 gezeigt. Um mit einer Verschraubung eine verschiebbare Befestigung zu erhalten, ist es zum Beispiel, wie hier dargestellt, möglich, in dem Verbundelement 1 ein Loch 51 auszubilden, das einen größeren Durchmesser aufweist als die Schraube 53. Der Durchmesser 55 des Lochs 51 wird dabei so gewählt, dass eine ausreichende Bewegung der Schraube möglich ist. Eine zusätzliche Sicherheit kann durch eine biegeweiche Schraube erzielt werden. In diesem Fall kann eine weitere Verschiebung des Verbundelements auch dann noch gewährleistet werden, wenn die Schraube bereits am Rand 57 des Lochs 51 anschlägt, indem die Schraube sich verformt. Im Allgemeinen wird eine ausreichende Bewegung erreicht, wenn das Loch 51 einen Durchmesser aufweist, der 2 bis 3 mal so groß ist wie der Durchmesser der Schraube. Um eine sichere Befestigung des Verbundelements 1 zu erhalten und zu verhindern, dass die Schraube durch das Loch gleitet, wird eine Schraube 53 verwendet, deren Schraubenkopf einen Durchmesser aufweist, der größer ist als der Durchmesser des Lochs 51.

Alternativ zu dem hier dargestellten großen Loch 51 ist es auch möglich, ein Langloch in dem Verbundelement 1 vorzusehen, durch das die Schraube geführt wird. Ein Langloch hat dabei den weiteren Vorteil, dass eine Bewegung nur in einer Richtung möglich ist. Hierbei wird das Langloch so ausgerichtet, dass dieses parallel zur Längsrichtung, das heißt parallel zu den Strukturen 9, 11, des Verbundelements 1 verläuft.

### Bezugszeichenliste

- 1: Verbundelement
- 3: innere Deckschicht
- 5: äußere metallische Deckschicht
- 7: Kern
- 9: Struktur
- 11: Struktur
- 13: Auskragung
- 15: Befestigungselement
- 17: Vorsprung
- 19: Rücksprung
- 21: Tragstruktur
- 23: U-Profil
- 25: Schenkel
- 27: Holzträger
- 29: Betonträger
- 31: Gewinde
- 33: Mutter
- 35: wellenförmiges Schadensbild
- 37: Befestigungsbereich
- 39: Agraffe
- 41: erster Flachhaken
- 43: zweiter Flachhaken
- 45: Schiene
- 47: Führung
- 49: Feder
- 51: Loch
- 53: Schraube
- 55: Durchmesser des Lochs 51
- 57: Rand

## Patentansprüche

1. Fassade für ein Gebäude, aufgebaut aus Verbundelementen (1), wobei die Verbundelemente (1) jeweils eine innere Deckschicht (3), eine Polymer-Schaumschicht als Kern (7) und eine äußere metallische Deckschicht (5) aufweisen und an einer Tragstruktur (21) befestigt sind, wobei jedes Verbundelement (1) mindestens zwei Befestigungsbereiche (37) aufweist, **dadurch gekennzeichnet, dass** alle Befestigungsbereiche auf einer Linie liegen, wobei in einem Befestigungsbereich (37) die Verbundelemente (1) unbeweglich mit der Tragstruktur (21) verbunden sind und die Verbundelemente (1) in den anderen Befestigungsbereichen (37) verschiebbar mit der Tragstruktur (21) verbunden sind oder wobei die Verbundelemente (1) mit der zum Boden weisenden Seite auf einer Halterung aufliegen und in allen Befestigungsbereichen (37) verschiebbar mit der Tragstruktur (21) verbunden sind.

2. Fassade gemäß Anspruch 1, **dadurch gekennzeichnet, dass** die verschiebbare Verbindung der Verbundelemente (1) mit der Tragstruktur (21) eine Verschiebung nur parallel zur Verbindungskante mit einem benachbarten Verbundelement (1) erlaubt.

3. Fassade gemäß Anspruch 1 oder 2, **dadurch gekennzeichnet, dass** die verschiebbare Befestigung ausgewählt ist aus einer Agraffe (39), einem verschiebbarem Riegel, einem Linearlager, einer Schienenführung (45, 47), einer Verschraubung mit einer Schraube durch Distanzstücke, die eine Bewegung der Schraube ermöglichen, einer Verschraubung mit Schrauben mit biegeweichem Kern oder einer Verschraubung durch ein Langloch, einer Verschraubung durch ein Loch (51) mit einem so großen Durchmesser, dass eine Bewegung der Schraube innerhalb des Lochs möglich ist, einer Befestigung mit Federn (49), die einerseits am Verbundelement (1) und andererseits an der Tragstruktur (21) befestigt sind oder einer Befestigung mit einem biegeweichen Zwischenelement.

4. Fassade gemäß einem der Ansprüche 1 bis 3, **dadurch gekennzeichnet, dass** in mindestens einem Befestigungsbereich (37) mindestens zwei Befestigungselemente zur Befestigung des Verbundelements (1) an der Tragstruktur (21) vorgesehen sind.

5. Fassade gemäß einem der Ansprüche 1 bis 4, **dadurch gekennzeichnet, dass** die unbewegliche Verbindung eine Verschraubung, Vernietung, Verklebung oder Verschweißung ist.

6. Fassade gemäß einem der Ansprüche 1 bis 5, **dadurch gekennzeichnet, dass** jedes Verbundelement (1) mindestens drei auf einer Linie liegende Befestigungsbereiche (37) aufweist.

7. Fassade gemäß einem der Ansprüche 1 bis 6, **dadurch gekennzeichnet, dass** die Befestigungsbereiche (37) an jedem Verbundelement (1) so positioniert sind, dass diese nach Montage jeweils von dem benachbarten Verbundelement (1) verdeckt werden.

8. Fassade gemäß einem der Ansprüche 1 bis 7, **dadurch gekennzeichnet, dass** die äußere metallische Deckschicht (5) eine Farbe mit einem Remissionswert im Bereich von 0 bis 74 % bezogen auf ein erdnahes Sonnenspektrum aufweist.

9. Fassade gemäß einem der Ansprüche 1 bis 8, **dadurch gekennzeichnet, dass** die Verbundelemente (1) vertikal oder horizontal an der Tragstruktur (21) angebracht sind, wobei bei einer horizontalen Anbringung die Halterung, auf der ein Verbundelement aufliegt, vorzugsweise jeweils von dem darunter liegenden Verbundelement gebildet wird.

10. Fassade gemäß einem der Ansprüche 1 bis 9, **dadurch gekennzeichnet, dass** die Verbundelemente (1) eine Länge im Bereich von 2,5 bis 30 m aufweisen.

11. Fassade gemäß einem der Ansprüche 1 bis 10, **dadurch gekennzeichnet, dass** die Verbundelemente (1) eine Breite im Bereich von 0,5 bis 1,25 m aufweisen.

12. Fassade gemäß einem der Ansprüche 1 bis 11, **dadurch gekennzeichnet, dass** die Verbundelemente (1) eine Dicke im Bereich von 60 bis 140 mm aufweisen.

13. Fassade gemäß einem der Ansprüche 1 bis 12, **dadurch gekennzeichnet, dass** die äußere metallische Deckschicht eine Dicke im Bereich von 0,25 bis 1,5 mm aufweist.

14. Fassade gemäß einem der Ansprüche 1 bis 13, **dadurch gekennzeichnet, dass** die äußere metallische Deckschicht (5) plan ist oder eine Mikrolinierung aufweist.

15. Fassade gemäß einem der Ansprüche 1 bis 14, **dadurch gekennzeichnet, dass** die Fassade eine Fassade einer Lagerhalle, einer Werkstatt, einer Turnhalle, eines Kaufhauses oder einer Montagehalle ist.

## Claims

1. A facade for a building, made up of composite elements (1), the composite elements (1) respectively having an inner cover layer (3), a polymer foam layer as the core (7) and an outer metallic cover layer (5) and being fastened to a supporting structure (21), each composite element (1) having at least two fastening regions (37), wherein all the fastening regions lie in a line, in one fastening region (37) the composite elements (1) being immovably connected to the supporting structure (21) and in the other fastening regions (37) the composite elements (1) being displaceably connected to the supporting structure (21), or the composite elements (1) resting with the ground-facing side on a mounting and in all fastening regions (37) being displaceably connected to the supporting structure (21) .

2. The facade according to claim 1, wherein the displaceable connection of the composite elements (1) to the supporting structure (21) allows a displacement only parallel to the connecting edge to an adjacent composite element (1).

3. The facade according to claim 1 or 2, wherein the displaceable fastening is selected from a clamp (39), a displaceable locking bar, a linear bearing, a rail guide (45, 47), a screw connection with a screw through distance pieces which enable a movement of the screw, a screw connection with screws having a flexible core, or a screw connection through a long hole, a screw connection through a hole (51) of such diameter that a movement of the screw within the hole is possible, a fastening with springs (49), which are fastened on the one hand to the composite element (1) and on the other hand to the supporting structure (21), or a fastening with a flexible intermediate element.

4. The facade according to one of claims 1 to 3, wherein, in at least one fastening region (37), at least two fastening elements for fastening the composite element (1) to the supporting structure (21) are provided.

5. The facade according to one of claims 1 to 4, wherein the immovable connection is a screw connection, riveting, bonding or welding.

6. The facade according to one of claims 1 to 5, wherein each composite element (1) has at least three fastening regions (37) lying in a line.

7. The facade according to one of claims 1 to 6, wherein the fastening regions (37) on each composite element (1) are positioned such that, following assembly, they are respectively concealed by the adjacent composite element (1).

8. The facade according to one of claims 1 to 7, wherein the outer metallic cover layer (5) has a color having a reflectance value within the range from 0 to 74% related to a near-earth solar spectrum.

9. The facade according to one of claims 1 to 8, wherein the composite elements (1) are fitted vertically or horizontally to the supporting structure (21), in the case of a horizontal fitting the mounting on which a composite element rests preferably being respectively formed by the underlying composite element.

10. The facade according to one of claims 1 to 9, wherein the composite elements (1) have a length within the range from 2.5 to 30 m.

11. The facade according to one of claims 1 to 10, wherein the composite elements (1) have a width within the range from 0.5 to 1.25 m.

12. The facade according to one of claims 1 to 11, wherein the composite elements (1) have a thickness within the range from 60 to 140 mm.

13. The facade according to one of claims 1 to 12, wherein the outer metallic cover layer has a thickness within the range from 0.25 to 1.5 mm.

14. The facade according to one of claims 1 to 13, wherein the outer metallic cover layer (5) is plane or has a microprofilation.

15. The facade according to one of claims 1 to 14, wherein the facade is a facade of a warehouse, a workshop, a sports hall, a department store, or an assembly shop.

## Revendications

1. Façade pour un bâtiment, montée à partir d'éléments composites (1), dans laquelle les éléments composites (1) présentent chacun une couche de recouvrement intérieure (3), une couche de mousse polymère comme noyau (7) et une couche de recouvrement extérieure métallique (5) et sont fixés à une structure portante (21), dans laquelle chaque élément composite (1) présente au moins deux zones de fixation (37), **caractérisée en ce que** toutes les zones de fixation sont situées sur une ligne, dans laquelle dans une zone de fixation (37) les éléments composites (1) sont assemblés de façon immobile à la structure portante (21) et les éléments composites (1) sont assemblés à la structure portante (21) de façon déplaçable dans les autres zones de fixation (37) ou dans laquelle les éléments composites (1) reposent sur un support par le côté tourné vers le sol et sont assemblés à la structure portante (21) de façon déplaçable dans toutes les zones de fixation (37).

2. Façade selon la revendication 1, **caractérisée en ce que** l'assemblage déplaçable des éléments composites (1) avec la structure portante (21) permet uniquement un déplacement parallèle au côté d'assemblage avec un élément composite voisin (1).

3. Façade selon une revendication 1 ou 2, **caractérisée en ce que** la fixation déplaçable est choisie parmi une agrafe (39), un verrou déplaçable, un appui linéaire, un guidage à rails (45, 47), un vissage avec une vis à travers des pièces d'écartement, qui permettent un mouvement de la vis, un vissage avec des vis avec un noyau flexible ou un vissage à travers un trou oblong, un vissage à travers un trou (51) d'un diamètre tel qu'un mouvement de la vis à l'intérieur du trou soit possible, une fixation avec des ressorts (49), qui sont fixés d'une part à l'élément composite (1) et d'autre part à la structure portante (21) ou une fixation avec un élément intermédiaire flexible.

4. Façade selon l'une quelconque des revendications 1 à 3, **caractérisée en ce qu'**il est prévu dans au moins une zone de fixation (37) au moins deux éléments de fixation pour la fixation de l'élément composite (1) à la structure portante (21).

5. Façade selon l'une quelconque des revendications 1 à 4, **caractérisée en ce que** l'assemblage immobile est un vissage, un rivetage, un collage ou un soudage.

6. Façade selon l'une quelconque des revendications 1 à 5, **caractérisée en ce que** chaque élément composite (1) présente au moins trois zones de fixation (37) situées sur une ligne.

7. Façade selon l'une quelconque des revendications 1 à 6, **caractérisée en ce que** les zones de fixation (37) sont positionnées sur chaque élément composite (1) de telle manière que celles-ci soient chaque fois masquées après le montage par l'élément composite voisin (1).

8. Façade selon l'une quelconque des revendications 1 à 7, **caractérisée en ce que** la couche de recouvrement extérieure métallique (5) présente une couleur avec une valeur de réflectance comprise dans la plage de 0 à 74 % par rapport à un spectre solaire proche de la Terre.

9. Façade selon l'une quelconque des revendications 1 à 8, **caractérisée en ce que** les éléments composites (1) sont posés verticalement ou horizontalement sur la structure portante (21), dans laquelle lors d'une pose horizontale le support, sur lequel un élément composite repose, est de préférence formé respectivement par l'élément composite sous-jacent.

10. Façade selon l'une quelconque des revendications 1 à 9, **caractérisée en ce que** les éléments composites (1) présentent une longueur comprise dans la plage de 2,5 à 30 m.

11. Façade selon l'une quelconque des revendications 1 à 10, **caractérisée en ce que** les éléments composites (1) présentent une largeur comprise dans la plage de 0,5 à 1,25 m.

12. Façade selon l'une quelconque des revendications 1 à 11, **caractérisée en ce que** les éléments composites (1) présentent une épaisseur comprise dans la plage de 60 à 140 mm.

13. Façade selon l'une quelconque des revendications 1 à 12, **caractérisée en ce que** la couche de recouvrement extérieure métallique présente une épaisseur comprise dans la plage de 0,25 à 1,5 mm.

14. Façade selon l'une quelconque des revendications 1 à 13, **caractérisée en ce que** la couche de recouvrement extérieure métallique (5) est plane ou présente un micro-marquage.

15. Façade selon l'une quelconque des revendications 1 à 14, **caractérisée en ce que** la façade est une façade d'un entrepôt, d'un atelier, d'un gymnase, d'un magasin ou d'un hall de montage.
